# EUROPEAN PATENT APPLICATION

(11) **EP 1 096 446 A2**
(43) Date of publication of application: **02.05.2001**
(21) Application number: 00203756.2
(22) Date of filing: 30.10.2000
(51) Int. Cl.: G07F 19/00

(54) **Method and system for secure communication between a self-service financial transaction terminal and a remote operator interface**

(30) Priority: 01.11.1999 US 162673 P
(71) Applicant: Citicorp Development Center, Inc., Los Angeles, California 90066 (US)
(72) Inventor: Schweppe, John Linus, Thousand Oaks, California 91320 (US); Sullivan, Mark, Venice, California 90291 (US)
(74) Representative: Hynell, Magnus

(57) **Abstract**

A method and system for secure communication between banking nodes over a network provides end-to-end security between a banking node, such as an ATM, and another banking node, such as a remote operator interface, a host, and/or an external system management node, utilizing an Internet Protocol Security (IPSec) software client running on a platform, such as an NT operating system platform, that is used on the banking nodes. An asymmetric key or certificate based approach is used, which involves the banking nodes automatically generating a public/private key pair at configuration time and putting together a certificate request when the key generation takes place. A certificate authority processes incoming certificate requests from the banking nodes on the ATM network which participate in the end-to-end security. Automated installation aspects are also utilized.

## Description

### PRIORITY APPLICATION

This application claims priority to co-pending US Provisional Application No. 60/162,673 filed November 1, 1999, entitled "Method And System For Secure Communication Between A Self-Service Transaction Terminal And A Remote Operator Interface (Remote Operator Interface Security)," and is incorporated herein by reference.

### CROSS REFERENCE TO RELATED APPLICATIONS

This application relates to Attorney Docket No. CITI0107/T0091-195418, filed simultaneously, entitled "Method And System For Obtaining Device Services On A Self-Service Financial Transaction Terminal," and is incorporated herein by reference.

This application relates to Attorney Docket No. CITI0200/T0091-195419, filed simultaneously, entitled "Method And System For Installing Ad/Or Upgrading Software On A Self-Service Financial Transaction Terminal From A Remote Computer," and is incorporated herein by reference.

This application relates to Attorney Docket No. CITI0202/T0091-195420, filed simultaneously, entitled "Method And System For Simultaneous And Unattended Installation Of Software On A Self-Service Financial Transaction Terminal," and is incorporated herein by reference.

This application relates to Attorney Docket No. CITI0199/T0091-195421, filed simultaneously, entitled "Method And System For Remote Operator Interface With A Self-Service Financial Transaction Terminal," and is incorporated herein by reference.

This application relates to Attorney Docket No. CITI0201/T0091-195422, filed simultaneously, entitled "Method And System For Coordinating Session Activities At A Self-Service Financial Transaction Terminal," and is incorporated herein by reference.

This application relates to Attorney Docket No. CITI0203/T0091-195578, filed simultaneously, entitled "Method And System For Configuration Of Self-Service Financial Transaction Terminals For A Common Software Release," and is incorporated herein by reference.

This application relates to US Provisional Application No. 60/162,994, filed November 1, 1999, entitled "Method And System For Extensions For Financial Services Service Provider Framework For A Self-Service Transaction Terminal (XFS Service Provider Framework)," and is incorporated herein by reference.

This application relates to US Provisional Application No. 60/163,002, filed November 1, 1999, entitled "Method And System For Installing And/Or Upgrading Software On A Self-Service Financial Transaction Terminal From A Remote Computer (Remote Installation/Software Upgrade)," and is incorporated herein by reference.

This application relates to US Provisional Application No. 60/162,815, filed November 1, 1999, entitled "Method And System For Simultaneous And Unattended Installation Of Software On A Self-Service Financial Transaction Terminal (Global Installation Framework)," and is incorporated herein by reference.

This application relates to US Provisional Application No. 60/163,000, filed November 1, 1999, entitled "Method And System Of Remote Operator Interface For A Self-Service Financial Terminal (Remote Operator Interface)", and is incorporated herein by reference.

This application relates to US Provisional Application Serial No. 60/162,816 filed November 1, 1999, entitled "Method And System For Coordinating Session Activities At A Self-Service Financial Transaction Terminal (ATM Session Manager)," and is incorporated herein by reference.

This application relates to US Provisional Application No. 60/162,672, filed November 1, 1999, entitled "Method And System For Configuration Of Self-Service Financial Terminals For A Common Software Release (Framework For Configuration Of Self-Service Financial Terminals)," and is incorporated herein by reference.

### COPYRIGHT NOTIFICATION

A portion of the disclosure of this patent document and its figures contain material that is subject to copyright protection. The copyright owner has no objection to the facsimile reproduction by anyone of the patent document or the patent disclosure, as it appears in the Patent and Trademark Office patent files or records, but otherwise reserves all copyrights whatsoever.

### BACKGROUND OF THE INVENTION

### 1. Field of the Invention

This invention relates generally to the field of self-service financial transaction terminals, such as automatic teller machines (ATMs), and more particularly to a method and system for secure communications between an ATM and a remote operator interface, such as a remote terminal.

### 2. Background

ATM machines include computer applications or software running on computer hardware within the ATM machine which, for example, interfaces with a host computer and other remote computers connected to the ATM over a network. It is extremely important to the entity which owns and/or manages and maintains the ATM machine, which is typically a financial institution such as a bank, to assure the security of data communicated over its ATM network. Currently, there is no satisfactory means for the financial institution to assure end-to-end security on its ATM network that enables the financial institution to securely manage its data across the ATM network.

### SUMMARY OF THE INVENTION

It is a feature and advantage of the present invention to provide a method and system for secure communication between a self-service transaction terminal, such as an ATM, and a remote operator interface, such as a remote PC, host computer, or main network monitor.

It is another feature and advantage of the present invention to provide a method and system for secure communication between a self-service transaction terminal and a remote operator interface, which assures end-to-end encryption for the communication.

It is a further feature and advantage of the present invention to provide a method and system for secure communication between a self-service transaction terminal and a remote operator interface in which the encryption and security is transparent to the remote operator interface client.

It is an additional feature and advantage of the present invention to provide a method and system for secure communication between a self-service transaction terminal and a remote operator interface which makes use of automatically generated asymmetric keys and certificates.

It is a still further feature and advantage of the present invention to provide a method and system for secure communication between a self-service transaction terminal and a remote operator interface which includes automatic installation features.

To achieve the stated and other features, advantages and objects, an embodiment of the present invention provides end-to-end security between one banking node, such as an ATM, and another banking node, such as a remote operator interface, a host, or an external system management node, utilizing an Internet Protocol Security (IPSec) software client running on a platform, such as an NT operating system platform, that is used on the banking nodes. An embodiment of the present invention makes use of an asymmetric key or certificate based approach, which involves the banking nodes automatically generating a public and private key pair at configuration time and putting together a certificate request when the key generation takes place. A certificate authority processes incoming certificate requests from the banking nodes on the ATM network which participate in the end-to-end security. An embodiment of the present invention also includes automated installation aspects.

An embodiment of the present invention enables secure communication between the banking nodes over the ATM network by configuring all network communication between the nodes to travel through a secure tunnel utilizing an implementation of IPSec. In an embodiment of the present invention, a root certificate, which is a self-signed digital certificate of the certificate authority, is installed, for example, on an ATM and/or on any other banking node with which secure communication is intended, such as the remote operator interface node, the host node, and/or the external system management node. The root certificate can be deployed, for example, for floppy disk-based installation, web-based installation, or depot-based installation. In the installation process, an IP address is entered for the certificate authority and one or more other banking nodes, such as another banking node designated to administer the particular ATM.

Upon deployment of the root certificate, in an embodiment of the present invention, the banking node generates a certificate request and a public/private key pair for the banking node, stores the private key locally on the banking node, and sends the certificate request packaged with the public key over the network to the certificate authority, which is configured with an IP address. The certificate request and public key are sent to the certificate authority along with information identifying the banking node. Upon receipt of the certificate request, the certificate authority checks a policy database of the certificate authority for banking nodes that the certificate authority is permitted to authenticate. If the banking node requesting the certificate is found in the policy database, the certificate authority issues a digital certificate authenticating the identity for the banking node.

In an embodiment of the present invention, the certificate authority sends the issued digital certificate to the requesting banking node over the network certifying the identity for the banking node and updates the policy database to reflect the issuance of the digital certificate to the banking node. In order for the requesting banking node to be issued a digital certificate, the particular banking node must be in the policy database of the certificate authority, which consists of banking nodes that the certificate authority is permitted to authenticate. Adding a banking node to the policy database is performed via a dedicated policy database management tool by clicking on 'Add a Node' displayed on a display screen of a graphical user interface of the management tool and entering an IP address for the banking node in response to a prompt.

In an embodiment of the present invention, the digital certificate issued by the certificate authority is imported into an IPSec configuration of the requesting banking node, and the banking node, such as an ATM, is allowed to mutually verify identification with at least one other banking node, such as a remote operator interface node, a host node, and/or an external system management node, by an exchange of the respective banking nodes' digital certificates. Mutual verification is performed by verifying the identities of the two banking nodes according to their respective digital certificates by an IPSec configuration of each banking node.

Additional objects, advantages, and novel features of the invention will be set forth in part in the description which follows, and in part will become more apparent to those skilled in the art upon examination of the following, or may be learned by practice of the invention.

### BRIEF DESCRIPTION OF THE DRAWINGS

Fig. 1 is a schematic diagram which illustrates an example overview of key components and the flow of information between the key components for one aspect of an embodiment of the present invention;
Fig. 2 is a schematic diagram which illustrates an example overview of key components and the flow of information between the key components for secure tunnels for another aspect of an embodiment of the present invention;
Fig. 3 is a schematic diagram which illustrates an overview example of key components and the flow of information between key components for blocking of an unauthorized node for an embodiment of the present invention;
Fig. 4 is a schematic diagram which illustrates an example overview of key components and the flow of information between the key components for certificate exchange for an embodiment of the present invention;
Fig. 5 is a schematic diagram which illustrates an example overview of key components and the flow of information between the key components for root-certificate deployment in an embodiment of the present invention;
Fig. 6 is a schematic diagram which illustrates an example overview of key components and the flow of information between the key components for certificate acquisition for an embodiment of the present invention;
Fig. 7 is a table which shows examples of configurable parameters of IPSec and selected examples of how they are set for an embodiment of the present invention;
Fig. 8 is a table which shows examples of ports and protocols which must be allowed to support secure communication and remote operator interface functionality for an embodiment of the present invention;
Fig. 9 is a sample graphical user interface (GUI) screen for the 'CA Database Maintenance Tool' for an embodiment of the present invention;
Fig. 10 is a diagram which illustrates an example of use of GMT for an embodiment of the present invention;
Fig. 11 is a diagram which illustrates an example of a situation in which the certificate is not valid to the certified node for an embodiment of the present invention; and
Fig. 12 is a diagram which illustrates an example of a scenario in which the certificate is not valid to other nodes for an embodiment of the present invention.

### DETAILED DESCRIPTION

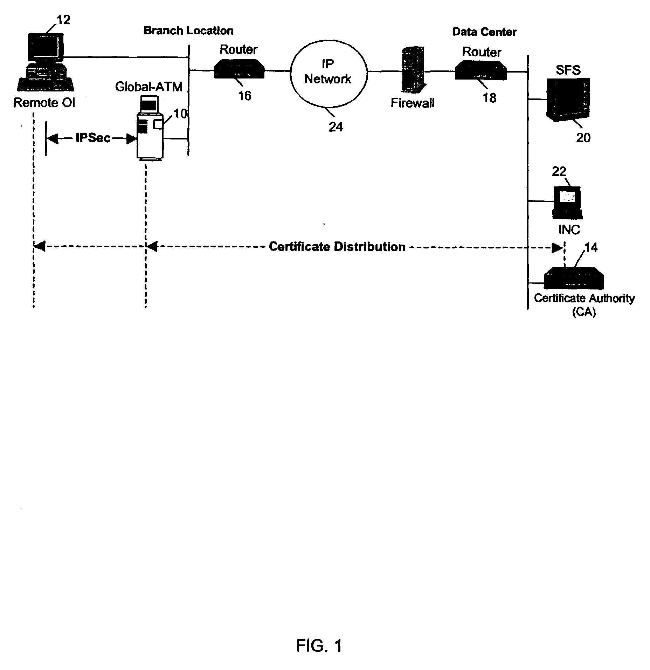

Referring now in detail to an embodiment of the present invention, an example of which is illustrated in the accompanying drawings, Fig. 1 is a schematic diagram which illustrates an example overview of key components and the flow of information between the key components for one aspect of an embodiment of the present invention. The method and system for an embodiment of the present invention provides end-to-end security between an ATM 10 and a remote operator interface 12 utilizing an Internet Protocol Security (IPSec) based solution which, to a greater extent, is Transmission Control Protocol/Internet Protocol (TCP/IP) data communication security. An embodiment of the present invention makes use of an IPSec software client that runs on a platform, such as the Windows NT platform. An example of a suitable IPSec software client is a product offered by a company known as IRE.

In this aspect of an embodiment of the present invention, the IPSec software client that runs on the NT platform is used on an ATM machine referred to as the ATM or the global ATM 10. The global ATM 10 is provided with a user touchpoint 12 which is used by staff personnel, aside from the regular customer touchpoint at the front of the ATM 10. More specifically, the user touchpoint 10 is separate from the ATM itself and takes the form of a personal computer (PC) 12 which runs a web browser. When a staff person interacts with the ATM 10 in terms of obtaining status information or to proof the ATM 10, or if a field engineer banking staff person wishes to maintain and diagnose problems with the ATM 10, he or she uses the remote browser of remote operator interface PC 12. The location of the remote operator interface PC 12 is typically in the same room as the ATM 10 or it can be located in a staff room nearby. However, the remote operator interface PC 12 can be extended to any location.

The client PC 12 that is used by staff persons for remote operator interface can be referred to as a remote operator interface touchpoint for an embodiment of the present invention. The remote operator interface touchpoint 12 consists of a PC platform running an operating system, such as Windows NT. For security reasons, an operating system, such as Windows NT, is run on the platform to provide a secure operating system environment. Along with the operating system, there is a browser, such as Internet Explorer, Version 4.0 or greater, also running on the remote operator interface PC 12. A feature which offers secure communication between the remote operator interface machine 12 and the ATM or global ATM 10 is the IPSec based software, such as the IRE product called SafeNet/Soft-PK, as an example for this discussion, which is installed on both the remote operator interface machine 12 and on the ATM or global ATM 10.

The IPSec software can be configured, for example, in two ways such that secure communications can be conducted for an embodiment of the present invention. One such way is to use a configuration called pre-shared keys between the remote operator interface machine 12 and the global ATM 10. A reason for considering use of the pre-shared key method is that it affords a simple way to manage encryption between nodes within the ATM network 24. However, the use of pro-shared keys has a potential problem of the knowledge of the pre-shared key being compromised, for example, by an unauthorized user at a remote operator interface machine 12 getting into the configuration and learning the pre-shared key or secret. Another way to configure the IPSec software is use of an asymmetric key approach, or what is referred to as a certificate based approach, which is also supported in the IPSec standard. This approach involves the client machine, such as the ATM 10, generating a key pair set at configuration time. The client machine generates a public and private key pair and, at the same time, it puts together a certificate request when this key generation takes place. From there, the certificate request is sent to a certificate authority 14, which is designed into the banking infrastructure.

The certificate authority 14 is another PC based machine which runs, for example, a web server, such as Windows NT Server with Internet Information Server, as well as, for example, a Microsoft certificate server product. The certificate server product processes incoming requests from the banking nodes, which include the global ATMs such as ATM 10, and the remote operator interface machines, such as PC 12, and it can also include components, such as routers 16 and 18 along the network 24, which participate in the end-to-end solution. In addition, other end nodes are also pulled in for secured communication. For example, the financial institution's front-end financial host machine 20 runs IPSec, as well as the financial institution's network distribution system, which is an intelligent network controller 22 that provides software distribution services as well as monitoring all the ATMs within the ATM network 24. It is not necessary for a field service person or banking staff person that uses the remote operator interface client 12 to know anything about the IPSec security solution, which is transparent not only to the user, but also to pre-existing programs that have been developed for both nodes. An embodiment of the present invention makes use of encryption and security that is implemented at the IP layer, which is a transport layer, and this offers a very simple way to provide end-to-end encryption.

A unique aspect of the present invention addresses a special need with respect to the global ATMs, such as ATM 10, which are machines that are serviced remotely and for which installation is done almost completely unattended. The particular type of ATM 10 does not have a keyboard or mouse, and an important feature associated with this aspect of the invention is the ability to install and configure IPSec software in an unattended fashion. Therefore, this aspect takes an IPSec client software product, such as the IRE SafeNet/Soft-PK, and creates a silent installation script which is prepackaged in-house with all the correct responses to automate the installation.

In addition, there are other features in this aspect of an embodiment of the present invention, such as the ability to generate the asymmetric keys in an automated fashion, which includes the certificate request as well, which is done with a particular client software set. One way to generate the asymmetric keys in an automated fashion is to have it scripted or to include command line arguments with the certificate generation system, which is scripted. Another approach uses a product, such as a Microsoft product called Microsoft Test, that automatically performs all the proper keystroke actions as if the installer were pressing the keys. In this approach, a Microsoft Test script is created, which automatically generates the keys and produces a certificate request.

After the certificate request is generated, the certificate request is sent to the certificate server 14. From there, on the certificate server side, a custom policy module takes in certificate requests from the financial institution's banking nodes, such as the ATM 10 or the financial institution's remote operator interface machine 12. The policy module, which resides on the certificate server 14, works from a database of pre-authorized banking nodes which consists primarily of the node name and an IP address. The policy module compares the certificate request against the database, and the policy module processes the request as the requesting banking node within the database and sends back the actual certificate to the requesting node, such as ATM 10 or remote operator interface PC 12. When the certificate comes back from the certificate server 14 to the banking node, the certificate that was generated is automatically received and installed into the IPSec software, so that it is able to operate. It is a requirement, based on a certificate configuration, that the certificate be obtained from a certificate server and be installed or implemented within the IPSec client software. After that takes place and the certificate is installed on the client, the financial institution is able to conduct secure communications.

Another feature of this aspect of an embodiment of the present invention, in terms of configuring an IPSec client on an end node, is to create the policy definition for the particular node. What this means is the ability to define on a particular end point, such as global ATM 10, what the other end node is with which the global ATM 10 will be securely communicating. In the case of a global ATM 10, the global ATM needs to communicate, for example, with a particular remote operator interface machine 12. Therefore, the global ATM 10 has a policy definition set up saying that it needs to conduct secure communications with the particular remote operator interface machine 12. The remote operator interface machine 12 is defined in that policy definition by various parameters, such as IP address and distinguished name. The policy definition that is in place on the global ATM 10 ensures secure communications between itself and the remote operator interface machine 12. Any other node with which the global ATM 10 communicates also has policy definitions set up on that machine to allow secure communications, including, for example, an ATM monitoring and management machine 22, which is the main network monitor for the banking system, and the financial institution's front-end financial host 20, which has all the customer transactional data on it.

In this aspect, to the extent that IPSec is considered an emerging encryption standard, an issue may arise as to how complete is the end-to-end security, for example, between the global ATM 12 and the main network monitor 22 and/or between the global ATM 12 and the front-end host 20. To address this issue, a router 18, such as a Cisco router, can be deployed in front of the main network monitor 22 and the front end host machine 20. For example, router 18 is situated directly in front of the main network monitor machine 22, and the secure communications are between the global ATM 12 and the router 18. In another feature of the present invention, an IPSec client software runs on the main network monitor machine 22, and it is important to assure that there is operability with the financial institution's pre-existing software on the main network monitor machine 22 before the IPSec client software is actually installed on the main network monitor machine 22. For the low risk approach, the router 18 is deployed in front of the main network monitor machine 22 to provide secure end-to-end communication.

An important feature of this aspect of the present invention is automated installation of the IPSec solution on the global ATM 10 to support end end-to-end communications. The IPSec solution can make use of pro-existing software that is IPSec compliant, and an embodiment of the present invention involves the automation feature using IPSec, which is mainly implemented on the global ATM 10 and partially implemented on the financial institution's certificate server machine 14 through the use of writing custom policy modules. In terms of the remote operator interface machine 12, it is used in a traditional sense, for example, of configuring the IPSec client software keyboard, mouse and instructions.

The types of secured communications that take place in an embodiment of the present invention are encrypted data, and IPSec outlines all the details that surround the mechanism behind encrypting data. At the application layer, the data that is exchanged includes, for example, reconciling accounts and reconciling the money on the ATM machine 10. However, the security that is implemented for an embodiment of the present invention is done at a lower layer, which is known as the Internet Protocol (IP) layer. The application layer and IP layer are not associated except in the sense that the sensitive data that is protected is at the application layer, and the data is secured or protected at the lower IP layer.

A desirable feature of use of IPSec for this aspect of the present invention is that it is done at a common point for intranet and internet communications. Virtually all data communications are or in the future will be running across Transmission Control Protocol/Internet Protocol (TCP/IP), which is a common layer in which to provide an encryption solution. If the encryption solution is provided too high, at the application layer, then it becomes specific to a specific application. If it is done too low, for example, at the link layer, then it is reliant on hardware specifics, such as token ring or ethernet. Implementation of the encryption solution at the IP layer coincides with the most universal communication point through which most data traffic is flowing, for example, within the banking network 24, on the Internet, and on most company intranets.

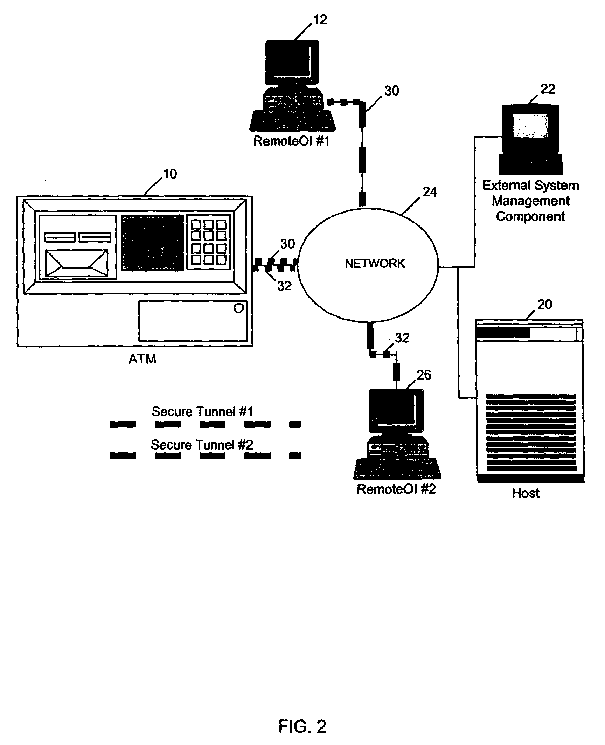

Fig. 2 is a schematic diagram which illustrates an example overview of key components and the flow of information between the key components for secure tunnels for another aspect of an embodiment of the present invention. In this aspect, a global ATM network security implementation, as it is delivered by Virtual Private Network (VPN), Micro Channel Architecture (MCA), Graphical Programming interface (GPI) and Graphics Interchange Format (GIF) releases, provides a fully encrypted and authenticated network path between the global ATM 10 and the remote operator interface 12 or 26. A feature of this implementation additionally secures the network paths from the global ATM 10 to the external system management component 22 and from the global ATM 10 to the host 20, thus providing a fully encrypted and authenticated end-to-end network solution for the complete global ATM environment.

In this aspect, in order to provide network security for the global ATM operational environment, all network traffic between the global ATM 10 and the remote operator interface 12 or 26 is authenticated and encrypted. This is achieved by configuring all traffic between these network nodes to travel through a secure tunnel, such as secure tunnel 30 or 32. A tunnel is a virtual connection between two or more machines that, through encryption and authentication, guarantees both the complete privacy and integrity of the communications and the identity of the communicating parties. Other machines on the network 24 cannot see the data that is traveling through the tunnel. Technically, they can see data flowing, but they cannot decrypt it, so it is in effect incomprehensible. The data traveling through the tunnel effectively cannot be tampered with, nor can the tunnel endpoints be impersonated. This technology is known as Virtual Private Networking, as for all practical purposes it creates an extremely private virtual network within a substantially less private, or even public, one.

In this aspect of the global ATM implementation, all tunnels are unique. A given tunnel is only used between two machines, such as tunnel 30 between global ATM 10 and remote operator interface machine 12. If there is another remote operator interface machine, such as PC 26, communicating with the particular global ATM 10, there is a different tunnel 32 associated with that communication. This is also true if a remote operator interface machine communicates with more than one global ATM. The remote operator interface machine has a unique tunnel for each global ATM with which it is in contact.

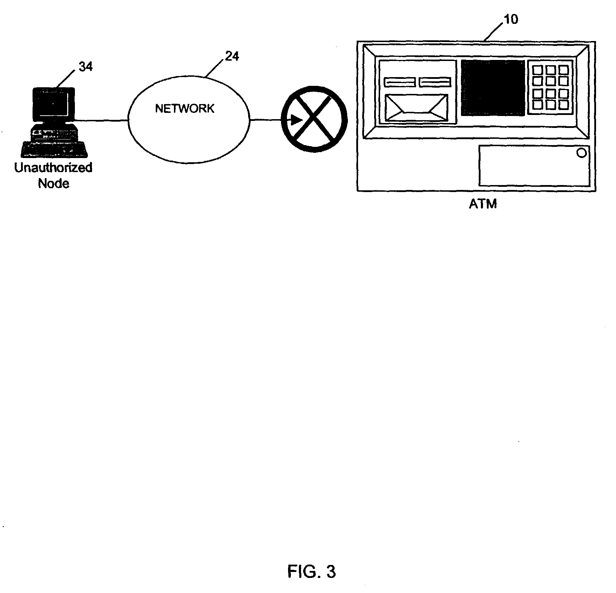

Additionally, in this aspect, the global ATM's network connections to other nodes such as the host 20 and the external system management component 22 are explicitly configured. Network nodes that are not explicitly allowed communications with the global ATM 10 are blocked at the network layer. Fig. 3 is a schematic diagram which illustrates an overview example of key components and the flow of information between key components for the aspect of blocking of an unauthorized node 34 for an embodiment of the present invention. A further feature of the network security implementation for this aspect of the present invention involves authentication and encryption of communications to and from all network nodes communicating with the global ATM 10.

The security solution of choice for this aspect of the present invention is an implementation of Internet Protocol Security (IPSec). This is an enhancement to the IP protocol that provides encryption and authentication services at the network layer, so that all higher layers may transparently take advantage of these services. By deploying IPSec on two or more machines and configuring it properly, all IP-based network traffic between those machines is both encrypted and authenticated, entirely without the awareness of the higher-level applications that make use of the network connectivity. IPSec is a standards-based solution that is rapidly becoming the technology of choice for the implementation of internetworking security and the creation of virtual private networks. An IPSec package suitable for use in an embodiment of the present invention should be stable, have excellent security features, be easy to deploy and enjoy extensive cross certifications for IPSec compatibility with hardware manufacturers, such as SafeNet/Soft-PK from IRE, Inc.

In this aspect, when establishing secure communications between two or more network nodes for an embodiment of the present invention, IPSec needs to verify the identity of the nodes. IPSec works with two different authentication methods which are pre-shared keys and X.509v3 digital certificates. The pre-shared key model uses shared secrets to prove identity which is conceptually similar to a password. This is inherently less secure and substantially harder to manage than the digital certificate model, in which authentication is provided by a trusted third party. Digital certificates have the additional benefit of supporting non-repudiation.

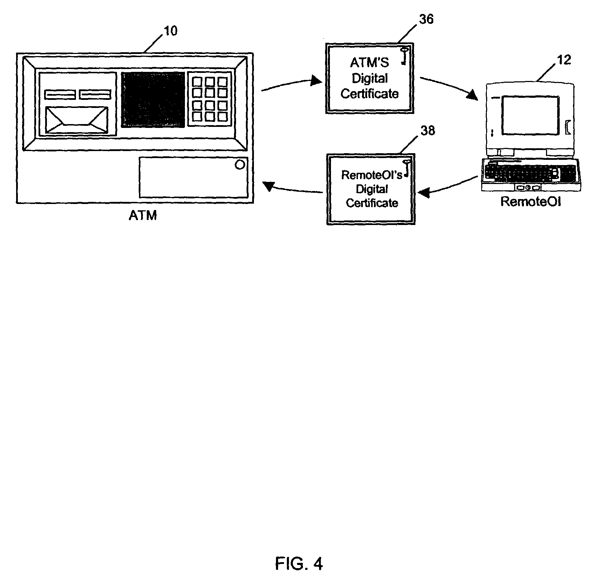

Accordingly, in this aspect of the present invention, X.509v3 digital certificates are used to provide verification of the identities of the global ATM and remote operator interface nodes. Fig. 4 is a schematic diagram which illustrates an example overview of key components and the flow of information between the key components for certificate exchange for this aspect of an embodiment of the present invention. These certificates 36, 38 are used in the establishment of the secure tunnel between the nodes 10 and 12. More specifically, the nodes 10 and 12 exchange their certificates 36 and 38 so that they may each verify the identity of the other. The certificates 36, 38 are cryptographically verified, at which point identity is assured and a secure tunnel is established.

In this aspect of the present invention, the certificate authority (CA) 14 issues the digital certificates authenticating the identity of the global ATM 10 and remote operator interface nodes 12, 26. The CA 14 acts as the trusted third party, resides in a protected data-center or other secure facility, and is administered by trusted data-center personnel. The CA 14 contains a list of nodes that it is willing to authenticate, which is known as the policy database. Data center personnel must update the policy database when new nodes are to be brought up on the network 24. Otherwise, the CA 14 will not authenticate the new nodes. Unauthenticated nodes are not able to establish secure communications with other nodes. The global ATM 10 does not allow unsecured communications between itself and the remote operator interface 12 or 26. A suitable CA 14 for an embodiment of the present invention should be extensible, integrated with the operating system, easy to deploy and administer, and have, highly configurable security implementation, such as Microsoft's Certificate Server.

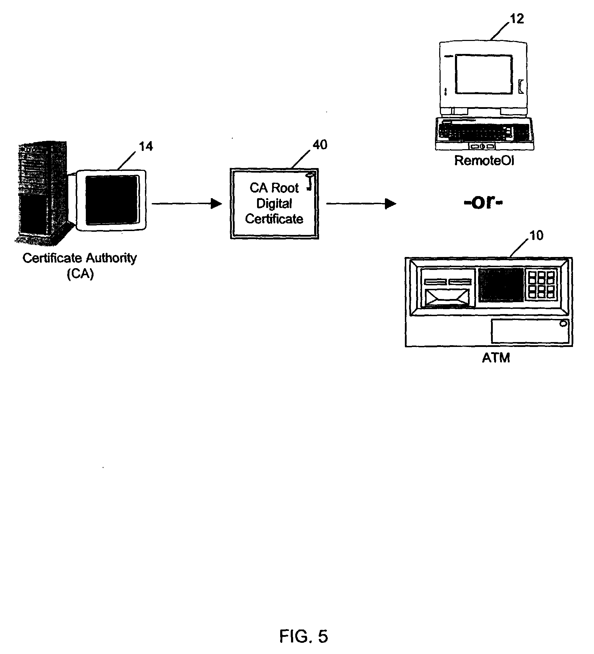

Fig. 5 is a schematic diagram which illustrates an example overview of key components and the flow of information between the key components for root-certificate deployment in this aspect of an embodiment of the present invention. In this aspect, a trust relationship between a node, such as remote operator interface 12 or global ATM 10, and the CA 14 must be established in order for the node to make use of identity certifications issued by the particular CA 14. This is achieved by installing the CA's self-signed digital certificate, or root certificate 40, on the node 10 or 12. Once this is done, node identity certification can take place.

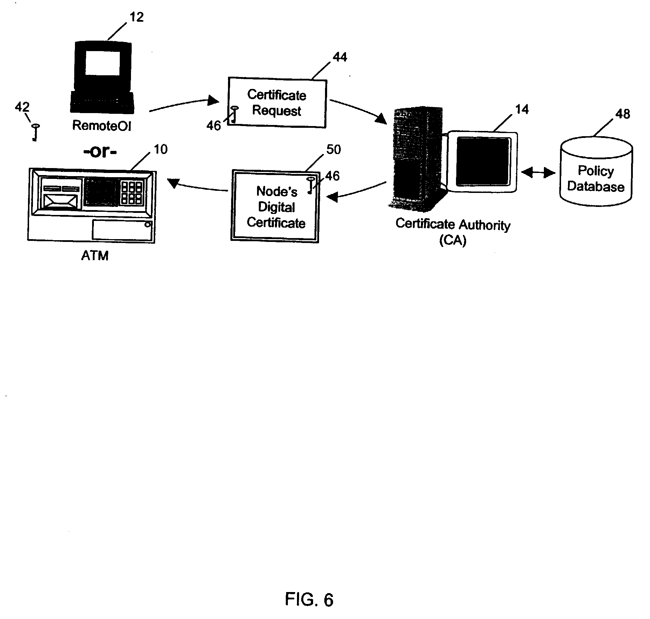

Fig. 6 is a schematic diagram which illustrates an example overview of key components and the flow of information between the key components for certificate acquisition for this aspect of an embodiment of the present invention. The private key 42 is stored locally on the node 10 or 12 and is never sent across the network. A network node for an embodiment of the present invention, whether it is the global ATM 10 or the remote operator interface 12, automatically receives its identity certification at node configuration time. This generally takes place at the time of a node's initial configuration but occurs on subsequent re-configurations as necessary. The node 10 or 12 first generates a certificate request 44 aid a public/private key pair. The public key 46 is packaged with the certificate request 44, which contains information identifying the node, and sent to the CA 14 through a Distributed Component Object Model (DCOM).

Referring to Fig. 6, when the CA 14 receives the certificate request 44, it checks a policy database 48 of nodes that it is willing to authenticate. If the node 10 or 12 requesting certification is in the policy database 48 and has been authorized for certification, a digital certificate 50 is issued and the policy database 48 updated to reflect that fact. The certificate 50 is returned to the node 10 or 12, where it is imported into the IPSec configuration. At this point, node identity certification is complete and the node 10 or 12 is capable of establishing secure communications. If the node 10 or 12 is not in the policy database 48 or has not been approved for certification, an error indicating this is returned to the node 10 or 12. The node 10 or 12 is not able to establish secure communications with other nodes until its identity has been certified.

Referring further to Fig. 6, after the node 10 or 12 is certified, a subsequent request for certification results in an error being returned to the node 10 or 12 unless it has been re-approved for certification in the policy database 48. The policy database 48 on the CA 14 can be perused periodically to verify that all nodes have been certified. If nodes have been authorized in the policy database 48 but have not been certified, this circumstance should be investigated and the discrepancy corrected. It is important to note that the certificate request 44 and resultant certificate 50 are packaged in formats respectively and are not in any way secret or sensitive in nature. The request 44 and certificate 50 contain only rudimentary identification information and the node's public key 46, along with information necessary to validate the integrity of the certificate 46. The node's private key 42 never leaves the node 10 or 12 itself. It is never transmitted across the network 24 at any time.

In this aspect of an embodiment of the invention, tunnel operation is entirely transparent to the applications residing on the global ATM 10 and the remote operator interface 12 or 26. Secure tunnels 30 or 32 are negotiated and established automatically on demand, based on the settings established at configuration time. Tunnel establishment does not require interaction with the CA 14 to complete. Tunnels 30 or 32 are utomatically re-negotiated when the security association (SA) lifespan expires, and are also terminated automatically at the expiration of the SA lifespan when network traffic between the nodes 10 and 12 has ceased.

Digital certificates are valid only for a limited amount of time, and after that time has passed, the certificate expires and is no longer usable. An additional feature of an embodiment of the present invention includes support for automated node re-certification.

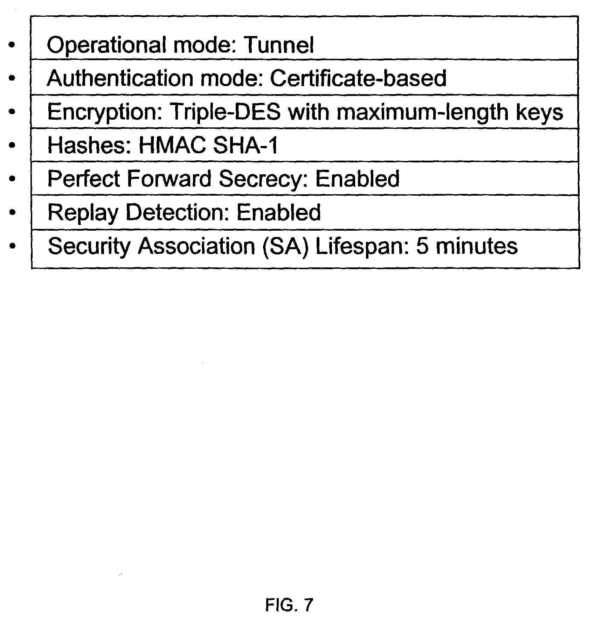

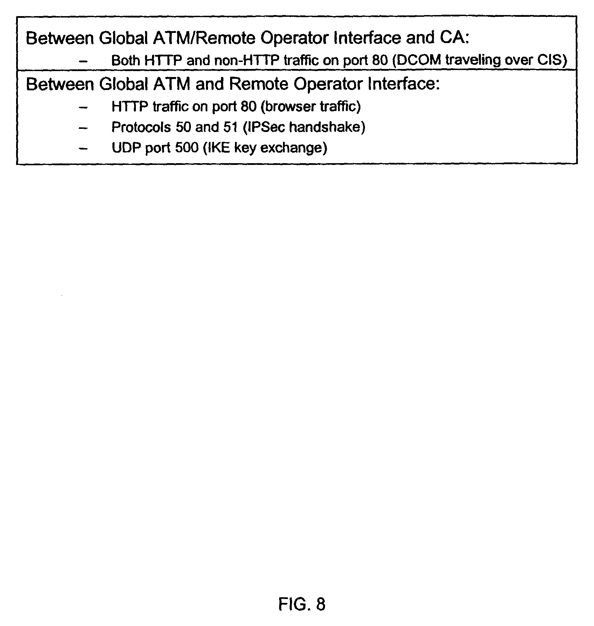

Fig. 7 is a table which shows examples of configurable parameters of IPSec and selected examples of how they are set for this aspect of an embodiment of the present invention. Such a configuration yields an extremely secure tunneling environment. It is basically the most secure configuration that IPSec or any of the alternatives provide. Fig. 8 is a table which shows examples of ports and protocols which must be allowed to support secure communication and remote operator interface functionality for an embodiment of the present invention.

In this aspect of the present invention, the CA 14 must be set up relatively early in the overall deployment, as its root certificate 40 is required for subsequent global ATM and remote operator interface node configurations. The CA 14 is a dedicated server that resides in a data center or other protected environment and has responsibility for issuing digital certificates to verify node identities. The CA 14 contains the policy database 48 that must be administered to authorize the issuance of digital certificates to a particular network node or nodes. Depending on the desired segmentation of duties among operational personnel, the CA 14 can be set up either in close physical proximity to the external system management component 22 so that the same operator can administer it, or it may be physically isolated from the external system management component 22 so as to provide an additional operational checkpoint prior to authorization of new network nodes. Alternatively, a maker/checker procedural model can be adopted to achieve the same end.

In an embodiment of the present invention, the CA 14 is preferably a dedicated machine and is not used for any other purpose. Hardware suitable for the CA 14 includes, for example, a Pentium-class personal computer (PC) with 1GB HDD (4GB recommended) and 64MB RAM, CD-ROM, SVGA-capable display, and network interface card (NIC). Software suitable for the CA 14 includes, for example, Microsoft Windows NT 4.0 Server, Network Associates NetShield NT 4.03a or later (installed after MCA), March Security Manager (SCM) and March Event Log Manager (ELM) (installed after MCA). Additionally, the MCA release must be installed on the CA 14. This will install NT Option Pack 4 including Certificate Server, Windows NT Service Pack 5, and Internet Explorer 5.0.

In the installation procedure for an embodiment of the present invention, Windows NT 4.0 Server is installed with the options of stand-alone, non-Primary Domain Controller (non-PDC) configuration, TCP/IP as the only installed network protocol, default workgroup membership with no domain specified, and 'NO' selected when prompted for IIS 2.0 installation. The machine 14 is configured with an IP address for network connectivity.

The MCA software release is installed by an administrator on the CA machine 14 according to the following procedure:
1.1) Close all other running applications prior to installing the software.
1.2) Insert the MCA CD-ROM into the CA machine 14 and run 'install.bat' from the root directory;
1.3) The installation runs automatically to completion. The machine 14 reboots twice during the installation, and logs back in automatically for the installation to continue. After the installation is complete, the machine 14 reboots for a third time, after which it will not log back in.
1.4) Log back in to the machine 14.
1.5) Launch the 'User Manager'.
1.6) Change the password of the user account 'CertTrans' to a new information security-compliant password, and set 'Password Never Expires' to 'true'.
1.7) Exit the 'User Manager'.
1.8) Configure the 'Transport Server' component.
   The transport server, which is the server-side component of the certification transport services, is installed on the CA machine 14 according to the following procedure:
2.1) From the 'Start' menu, run the program 'dcomcnfg.exe';
2.2) From the 'Application' tab, select 'TransServer.TransClass' and click on 'Properties';
2.3) From the 'Security' tab, select 'Use Custom Access Permissions', and click on 'Edit...';
2.4) Add the group 'Everyone' to the list with an access type of 'Allow Access' and click 'OK';
2.5) Also from the 'Security' tab, select 'Use Custom Launch Permissions' and click on 'Edit...';
2.6) Add the group 'Everyone' to the list with an access type of 'Allow Launch' and click 'OK';
2.7) From the 'Identity' tab, select 'This User' and enter 'CertTrans' as the user and the password of the 'CertTrans' account. This is the password that was changed in foregoing step 1.6 of installation of the MCA release;
2.8) Click 'OK' to close the 'TransServer,TransClass Properties' window. From the 'Default Properties' tab, verify that both the 'Enable Distributed COM on this Computer' and the 'Enable COM Internet Services' boxes are checked. For 'Default Authentication Level' select 'None' and for 'Default Impersonation Level' select 'Anonymous';
2.9) From the 'Default Protocols' tab, select 'Remove' for all the installed protocols. Select 'Add' and choose the protocol 'Tunneling TCP/IP';
2.10) Click 'OK' to complete the DCOM configuration.
   For configuration of the Remote Procedure Call (RPC), CIS requires that Service Pack 4 be installed on the Windows NT Server 4.0 computer 14. CIS also requires that Internet Information Server 4.0, including the Internet Service Manager, be running. IIS 4.0 is part of the Windows NT 4.0 Option Pack. It is noted that CIS should not be installed on a machine running Microsoft Proxy Server. The RPC is configured as follows:
3.1) Create an RPC subdirectory under the 'Inetpub' directory. For example, at the command prompt, type: 'md c:\inetpub\rpc' or use Explorer to create the folder. This directory is referred to as '%inetpub%\rpc' in the following instructions, but when prompted, type in the actual physical path, which is 'c:\inetpub\rpc');
3.2) Copy 'Rpcproxy.dll' from the Windows system directory to '%inetpub%\rpc'. For example, at the command prompt, type: 'copy %windir%\system32\rpcproxy.dll c:\inetpub\rpc' or use Explorer to copy the file;
3.3) Create a virtual root for the directory that was created. To do this: from the 'Start' menu, select 'Programs', point to 'Windows NT 4.0 Option Pack', then 'Microsoft Internet Information Server', and then click 'Internet Server Manager'. In the console tree (the left pane), select 'Console RootIIIS/〈machine name〉fDefault Web Site'. Right-click 'Default Web Site', click 'Create New', and then click 'Virtual Directory'. In the 'New Virtual Directory' wizard, enter 'RPC' for 'Alias to be Used to Access Virtual Directory', '%Inetpub%\rpc' for 'Physical Path', and 'Execute Access' for 'Permissions';
3.4) Without closing 'Internet Service Manager', change the connection timeout for the 'Default Web Site' to '5 minutes'. To do this, in the console tree (the left pane), select 'Console Root/IIS/〈machine name〉fDefault Web Site'; right-click 'Default Web Site' and then click 'Properties'; in the 'Default Web Site Properties' dialog box, select the 'Web Site' tab; change the 'Connection Timeout' to '300'; click 'OK' without closing 'Internet Service Manager; install the 'RPC Proxy ISAPI Filter'; select 'Console RootIIIS/〈machine name〉' in the console tree (the left pane); right-click the machine name; click 'Properties'; select 'Edit' for the 'Master WWW Service Properties'; select the 'ISAPI Filters' tab; select 'Add'; and then enter 'Rpcproxy' for 'Filter Name' and '%Inetput%\rpc\rpcproxy.dll' for 'Executable;
3.5) The 'Internet Service Manager can then be closed. RPC and Transport Server configuration is now completed, and the machine 14 is rebooted for the foregoing changes to take effect.
   The CA 14 is configured by the MCA release to comply with information security policies and standards. The business should ensure that physical access to the CA machine 14 is limited in accordance with information security policies, should install Network Associates NetShield v 4.03a or later to provide anti-virus protection, and should install March Security Manager and March Event Log Manager software. The DCOM configuration of the CA 14 allows only the Transport Server component to be created from outside of the machine 14. All other COM components on the CA 14 are restricted to local creation only.
   The CA root certificate 40 is deployed to all the global ATM and remote operator interface nodes prior to node configuration. It should be stressed that the CA root certificate 40 does not contain secret or sensitive information. Three different methods of deploying this certificate include floppy-based, web-based, and depot-based. Deployment of the root certificate 40 via floppy is the preferred method for limited-scale deployments of global ATM and remote operator interface nodes.
   For floppy-based deployment, data center personnel place the root certificate 40 on one or more floppy disks, and one of these disks is made available to the field installers at node configuration time. The global ATM 10 prompts for this disk during node configuration, as will the 'Virtual Private Network Configuration Tool' on remote operator interface node, such as remote operator PCs 12 or 26. Root certificate floppy disk creation involves inserting a blank formatted floppy disk into the CA's floppy drive and copying the file named, '〈CA_SERVER_NAME〉_eCITICA.crt' from the 'c:\certs' directory to the floppy. For example, if the CA server name is 'CertAuth', the file to copy is named 'c:\certs\CertAuth_eCITICA.crt'.
   Web-based root certificate deployment for an embodiment of the present invention is available only on remote operator interface nodes, such as remote operator interface PCs 12 and 26. It is the method of choice when a remote operator interface node is at a different physical location than the global ATM 10 and/or the floppy disk containing the root certificate 40 is not available. Depot-based root certificate deployment is the preferred method for larger global ATM deployments. After the master image is created, the CA root certificate 40 is installed on the master. The master is then cloned to create disks for global ATM field installations. A floppy disk containing the root certificate 40 for depot installation is created in the same way as floppy disk creation for the floppy-based deployment.
   In an embodiment of the present invention, the policy database 48 is a list of network nodes that the CA 14 is willing to authenticate. This list must be updated when new global ATM or remote operator interface nodes are to be brought up on the network. This task is performed through a dedicated policy database management tool. From the 'Start->Programs->CA Database Maintenance Tool', the 'CA Database Maintenance Tool' is run, and the policy database 48 is opened automatically.

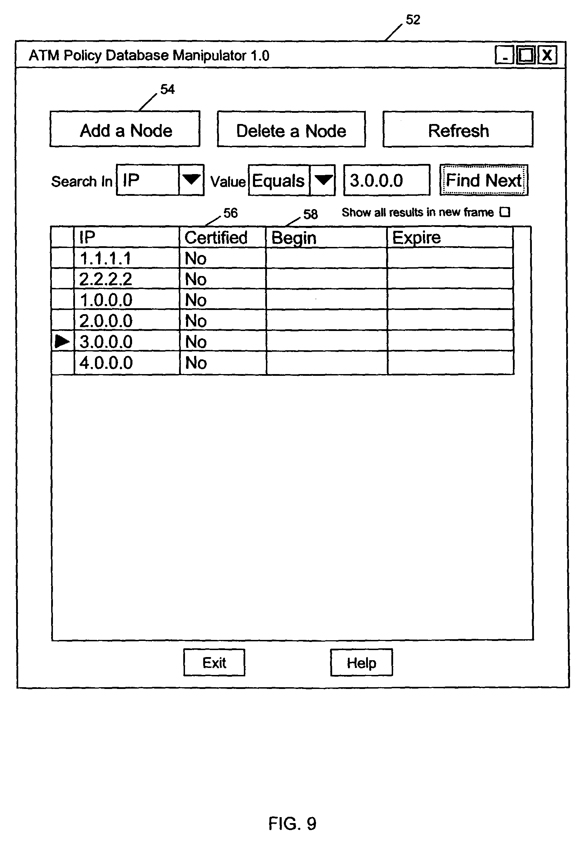

   Fig. 9 is a sample graphical user interface (GUI) screen 52 for the 'CA Database Maintenance Tool' for an embodiment of the present invention. Referring to Fig. 9, to add additional network nodes to the policy database, click 'Add a Node'54, and the GUI 52 prompts the user for the IP address to add. Any changes made to the policy database 48 by the tool are logged. Referring further to Fig. 9, if a node has already had its identity certified by the CA 14, the 'Certified' field 56 for that record is checked, and the date of certification is in the 'Begin' field 58. If for some reason the particular node needs to be certified again, such as because the node's hard disk crashed, the 'Certified' field 56 can simply be cleared, which allows a new certificate to be issued to that node. It is suggested that a maker/checker paradigm be used to administer the policy database 48.
   Periodically, the policy database 48 is perused to verify that all nodes authorized for certification have actually been certified. Any discrepancy between the state indicated by the policy database 48 and the actual field conditions are thoroughly investigated to understand the cause of the discrepancy, as this circumstance may construe an early indication of improper activity in the field.
   In one implementation of an embodiment of the present invention, a one-time manual validation of node certification events is performed. More specifically, when nodes have been authorized for certification in the policy database 48 but not yet certified, such as during periods of active deployment, it is necessary to peruse either the policy database 45 or the event log multiple times throughout the day, and when a node certification event occurs, to manually validate installation of the particular node by independently contacting the field. This manual validation can be more easily achieved by leveraging an off-the-shelf event log monitoring and alerting tool. In another implementation of an embodiment of the present invention, primarily for larger regions, an existing trust relationship is leveraged to eliminate the need for this procedural step.
   In an embodiment of the present invention, the CA machine 14 is backed-up and restored through standard data center backup mechanisms. These backups are handled in a secure and controlled fashion. It is required to back up the policy database 48 periodically, as well as when a new node is added to the policy database 48. The procedure for backing up the policy database 48 involves launching the Explorer, navigating to the directory 'C:\winnt\System32\CertLog', and copying the file 'policy.mdb' on to the backup media. For restoration of the policy database 48 from the backup media, if the policy database 48 was backed up in a floppy, the floppy is inserted into the floppy drive, and the 'policy.mdb' file is copied back to the directory, 'C:\winnt\System32\CertLog'.
   Hardware requirements for the remote operator interface 12 or 26 for an embodiment of the present invention include, for example, a Pentium-class PC with 1GB HDD, 32MB RAM, CD-ROM, 1024x768x256-capable display, and a network interface card (NIC). Software requirements for the remote operator interface 12 or 26 for an embodiment of the present invention include, for example, Microsoft Windows NT 4.0 Workstation, Windows NT 4.0 Service Pack 5 or later, Internet Explorer 4.01 or later, and Network Associates NetShield NT 4.03a or later. Additionally, the VPN release is installed on the remote operator interface nodes 12 or 26. This installs IRE SafeNet/Soft-PK v 2.1.0 and the Virtual PrivateNetwork Configuration Tool.
   The procedure for installing and configuring a remote operator interface node, such as remote operator PC 12 or 26, for secure communications with the global ATM 10 requires administrative privileges on the remote operator interface machine 12 or 26 to perform the installation and configuration. The VPN release is installed on the remote operator interface machine 12 or 26 according to the following procedure:
4.1) Close all other running applications prior to installing the software;
4.2) Insert the VPN CD-ROM into the machine 12 or 26 and run 'Setup.exe' from the root directory;
4.3) Besides the registration screen, which prompts for entry of a user name and company name, accept all default selections;
4.4) Choose the 'reboot' option after installation has completed.
   After the machine 12 or 26 has rebooted, the CA root certificate 40 must be installed prior to configuring the machine 12 or 26 for secure communications. If the CA root certificate floppy disk is available, the installation of the certificate 40 can be performed through the Virtual Private Network Configuration Tool. If the CA root certificate floppy disk is not available, the root certificate 40 must be obtained through a web browser.
   Acquisition of the web-based root certificate 40 is as follows:
5.1) Open the URL, 'http://〈CA_SERVER_NAME〉/CertSrv/CertEnroll/cacerts.htm'. For example, if the CA server name is 'CertAuth', then open the URL, 'http://CertAuth/CertSrv/CertEnroll/cacerts.htm';
5.2) Once the page has displayed in the user's browser, select the 'Certificate for ...' link. This is a link to a file containing the CA root certificate 40. A dialog box appears asking whether the user wants to open the file or save it. The file is saved as 'c:\temp\cert.der'.
5.3) From the 'Start' menu, 'Run...' the program 'cmd.exe'; and
5.4) Enter the commands, 'cd\winnt\system32' and 'scriptit CertImport.ini'. The ensuing process, which takes less than 30 seconds, should not be interrupted. When the process has completed, the CA root certificate 40 is imported and ready for use.
   The Virtual Private Network Configuration Tool configures the remote operator interface machine 12 or 26 for an embodiment of the present invention to establish secure communications with the global ATM 10 according to the following:
6.1) From 'Start->Programs', run 'VPN Configuration' and follow the prompts;
6.2) If the CA root certificate 40 was not installed in the prior step, the tool prompts for the floppy disk containing it;
6.3) The tool prompts for the IP address of the CA 14 and attempts to acquire identity certification for the remote operator interface machine 12 or 26. The CA 14 must be available on the network 24 for this step to complete. It is important to note that the IP address that is entered must be that of the CA 14 that issued the CA root certificate 40 that has been installed on the node 12 or 26.
6.4) Once identity certification has been acquired, the tool presents a simple user-interface that allows for the addition and removal of destination nodes to the remote operator interface machine's Virtual Private Network. The IP addresses of any global ATMs, such as ATM 10 that the particular remote operator interface node 12 or 26 is to administer are entered in this user interface. The global ATM 10 must also be configured for secure communications with the remote operator interface machine 12 or 26.
6.5) Upon receiving confirmation from the user, the tool configures the system to support secure communications with these destination nodes.
The tool does not block all other network connections on a remote operator interface node, such as remote operator interface PC 12 or 26. This behavior is desirable only on the global ATM 10, as remote operator interface nodes are not dedicated.

The remote operator interface machines, such as remote operator interface PCs 12 or 26, are configured by the business in accordance with current information security policies and standards. This includes but is not limited, for example, to using Windows NT, ensuring proper physical and user access to the machine 12 or 26, enforcing password restrictions on user accounts, configuring proper system auditing and event logging, and installation of approved anti-virus software

In an embodiment of the present invention, the VPN, GPI, and GIF releases are installed on the global ATM 10 to support secure network communications. The VPN software is installed as part of the overall global ATM installation. During the initial configuration of a global ATM, such as ATM 10, the configuration utility prompts for the floppy containing the CA root certificate 40. The certificate is imported into the global ATM 10 at this time. If the floppy is not available, the global ATM 10 can still be configured, but it will not have remote operator interface functionality available to it. When the floppy becomes available, the global ATM 10 is re-configured to enable secure communications and remote operator interface functionality.

After the successful importation of the CA root certificate 40, the global ATM configuration utility prompts for the IP address of the CA 14, so that an identity certification can be requested. It is important to note that the IP address that is entered must be that of the CA 14 that issued the CA root certificate 40 that has been imported on the node, such as remote operator interface nodes 12 or 26. The configuration utility then prompts for the IP addresses of the remote operator interface nodes 12 or 26 that are to administer the global ATM 10. Multiple remote operator interface connections are supported for each global ATM.

Secure connections are configured to the remote operator interface nodes entered, and other authorized connections, such as the external system management component 22 and the host 20, are explicitly configured. All other network connections to the global ATM 10 are blocked at this time. Once the global ATM configuration has completed, the secure VPN is fully configured and ready for use. On subsequent re-configurations of the global ATM 10, VPN configuration takes place again to reflect any changes in the operational parameters entered. If, however, the node has already had its identity certified, then this step is not repeated. Security configuration on the global ATM 10 as it relates to the VPN takes place automatically at installation and configuration times.

The business has the responsibility to comply with information security policies and restrictions regarding account passwords. However, there is significant procedural impact in introducing matters such as password expiration and lockout in the global ATM environment. This impact can be understood within the context of existing procedures and field requirements. As such, the business must achieve procedures that allow for the implementation of these policies and restrictions and must enable the enforcement of the policies and restrictions. The operator interface has the ability to enable the enforcement of the information security policies and restrictions regarding account passwords.

In an embodiment of the present invention, all ports that are not necessary to the operation of the global ATM 10 are disabled. Internet Control Message Protocol (ICMP) reply is disabled on the global ATM 10 and will not respond to a ping from another network node unless that node has been explicitly entitled when configuring the global ATM 10. The ICMP utility 'tracert' is present on the global ATM 10 for network troubleshooting purposes. It is configured to support only Transmission Control Protocol (TCP) and User Datagram Protocol (UDP) protocols for communications. Simple Network Management Protocol (SNMP) is entirely disabled on the global ATM 10.

In an embodiment of the present invention, consideration is given to the impact of CA unavailability on VPN clients, and specifically, consideration of how the global ATM 10 and remote operator interface end-nodes 12 or 26 are affected operationally and at install/configuration time if the CA 14 is not available. There is only one operationally significant impact of CA unavailability. If the CA 14 is unavailable at a node's initial configuration time, that node's identity will not be certified. When a node's identity has not been certified, it is not able to establish secure connections. This circumstance may be recovered from by ensuring CA availability and policy data state and simply reconfiguring the node, at which point identity certification takes place as normal.

Referring again to Fig. 6, identity certification describes a node's actual acquisition of the node's digital certificate 50 from the CA 14. This takes place at the node's initial configuration time and constitutes transporting the certificate request 44 across the network 24 from the node 10 or 12 to the CA 14, and the CA 14 validating the request and sending the resultant certificate 50 back across the network 24 to the node 10 or 12. This is the complete extent of the node's interaction with the CA 14 during initial configuration. If the CA 14 is not available for some reason during a node's initial configuration, such as the network 24 fails or the machine hosting the CA 14 is down, the identity certification does not take place. This circumstance may be detected by the presence of a message in the event log, "Unable to obtain client certificate" from a source "VPN Configuration". This failure prevents secure connections from being established to or from the particular node 10 or 12 but would not affect the ability to block unauthorized connections to the node 10 or 12.

Recovery from this circumstance is straightforward. Once the CA 14 is available, the CA operator verifies that the policy database 48 reflects the fact that the node 10 or 12 was not certified, the node 10 or 12 can simply be re-configured and identity certification takes place as normal. Once identity certification has taken place at the time of a node's initial configuration or in the recovery scenario as described above, there is no further interaction between the node 10 or 12 and the CA 14 during subsequent configurations, except at the time of certificate expiration, which is detailed below.

In one implementation of an embodiment of the present invention, a Certificate Revocation List (CRL) support is not included. In this implementation, the CRL retrieval is managed by the Certificate Enrollment Protocol (CEP) once the end-to-end ATM network security is deployed. When the end-to-end ATM security is in place, the CA 14 publishes the Certificate Revocation List (CRL). The CA 14 updates this list whenever it wants to invalidate an already-issued certificate. To assure the integrity of trust relationships, VPN nodes periodically check this list. If the CA 14 is not available to publish this list, operations continue as normal, but no certificates can be invalidated until the CA 14 is restored to availability.

At the time of a node's certificate expiration, an automated identity re-certification takes place. If the CA 14 is unavailable at that time, it is essentially the same as initial node configuration in terms of impact and recovery. There is, however, a substantially larger time frame in which this re-certification can take place. Attempts to re-certify begin prior to the expiration of the current certificate. The likelihood of the CA 14 being unavailable for such a long period is extremely low. However, if such a circumstance arises, the recovery procedure is exactly the same as for initial configuration.

Good security requires periodic re-validation of trust relationships. Therefore, digital certificates have a built-in validity period. This means that prior to a certain date and time and after a certain later date and time, a digital certificate is invalid and unusable for any certificate-requiring applications. When the CA 14 issues a digital certificate, the start of that certificate's validity period is set to the time of issuance in GMT, which is the current time from the CA's perspective. The end of the validity period is set to some later date, typically a few months or years after the start.

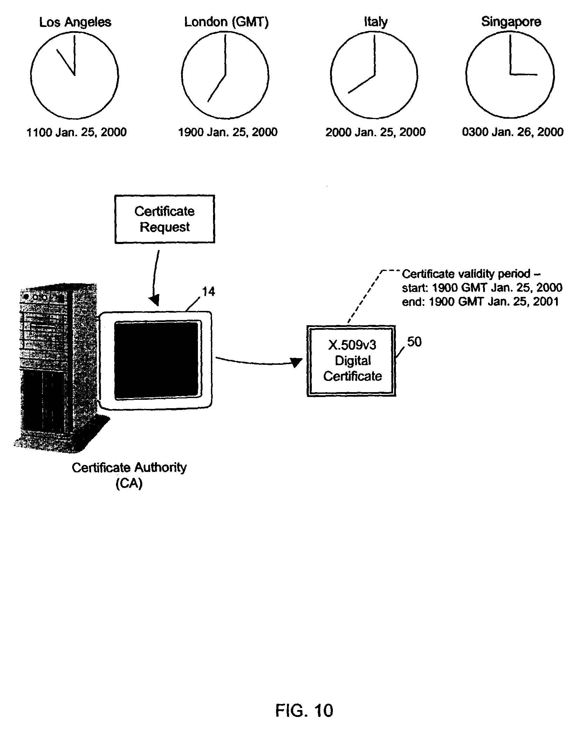

Fig. 10 is a diagram which illustrates an example of use of GMT for an embodiment of the present invention. Referring to Fig. 10, the start of the certificate validity period is always set to the GMT of issuance, in this case 1900 hours on January 25, 2000. Because of the existence of this validity period, a circumstance can arise where the certificate 50 has been issued by the CA 14, but is not yet valid to the node to which it has been issued, which prevents the immediate use of the certificate 50 by the node. This can occur if the entities involved with the certification, which are the CA 14 and the certified node, are significantly out-of-sync from a temporal standpoint.

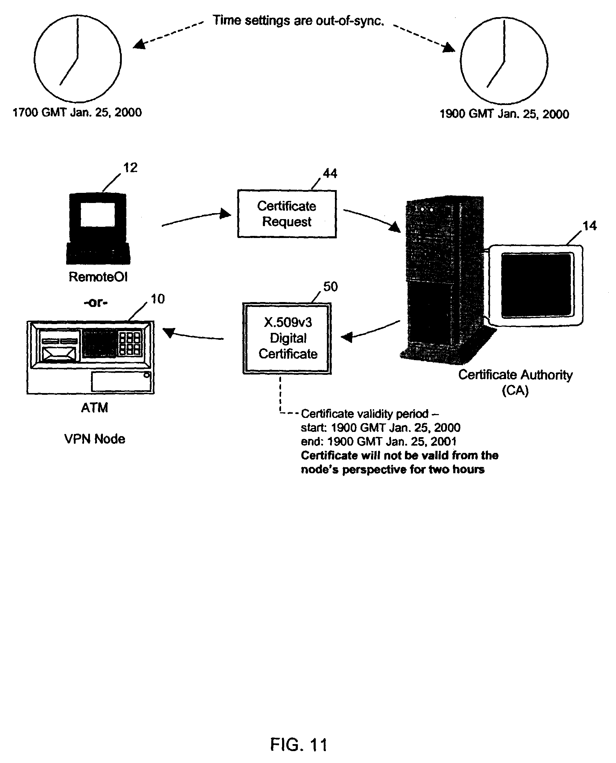

Fig. 11 is a diagram which illustrates an example of a situation in which the certificate 50 is not valid to the certified node 10 or 12. For example, if the CA 14 is set to 1900 GMT, and the node 10 or 12 requesting certification is set to 1700 GMT, the certificate 50 issued to that node 10 or 12 has a starting validity period of 1900 GMT and will not be valid from the node's perspective for two hours.

A slightly more subtle variation of this problem occurs if, for example, the CA 14 is set to 1200 PST (2000 GMT) and the requesting node 10 or 12 is set to 1200 GMT. The issued certificate 50 has a starting validity period of 2000 GMT and is not valid to the requesting node 10 or 12 for eight hours in spite of the fact that, on casual perusal, the node 10 or 12 and the CA 14 appear to be set to the same time. This emphasizes the importance of paying attention to the time zone settings. This is similar to the scenario illustrated in Fig. 11 with different time settings. Conversely, if the CA 14 is set, for example, to 1200 PST (2000 GMT) and the requesting node 10 or 12 is set to 1500 EST (also 2000 GMT), the certificate 50 is immediately valid.

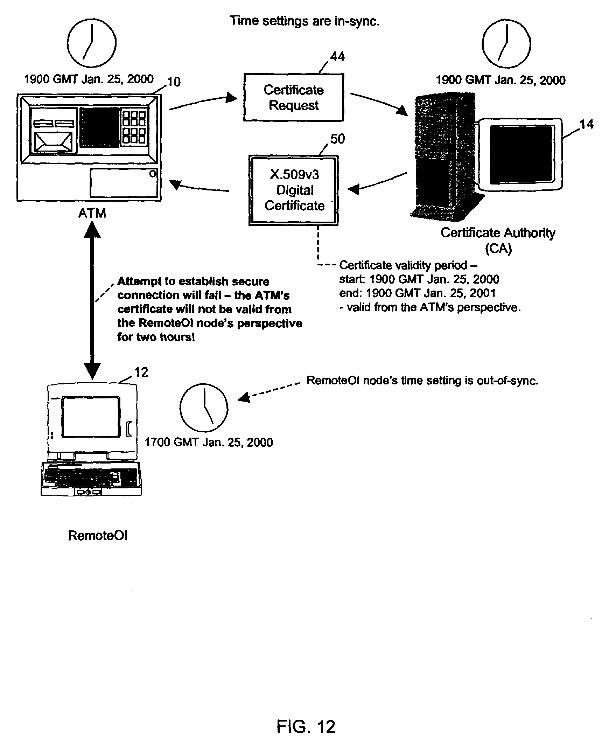

Another permutation of this problem occurs when the CA 14 and the certified end-node, such as the global ATM 10, agree on a common time, but another node, such as the remote operator interface PC 12, trying to establish secure communications with the certified end-node 10 does not. Fig. 12 is a diagram which illustrates an example of a scenario in which the certificate is not valid to other nodes for an embodiment of the present invention. The remote operator interface node 12 attempts to use the certificate 50 of the global ATM 10, and vice-versa, to verify the other's identity and negotiate a secure communication channel. If the time setting on the remote operator interface node 12 is earlier than that of the global ATM 10 and the CA 14, the global ATM's certificate 50 is not yet valid from the remote operator interface node's perspective, and a secure session will not be established.

Referring to Fig. 12, the CA 14 and the global ATM 10 are time-synchronized to 1900 GMT on January 25, 2000. The certificate 50 issued to the global ATM 10 by the CA14 is immediately valid and useable from the global ATM's perspective. However, the remote operator interface node 12 attempting to establish a secure connection with the global ATM 10 is set to 1700 GMT on January 25, 2000. When the remote operator interface node 12 tries to validate the global ATM's certificate 50 to verify the identity of the global ATM 10, it is not able to do so because the certificate 50 will not be valid for two hours from the remote operator interface node's perspective. This will, in turn, prevent the establishment of a secure connection.

Given these factors, it is important that all the nodes in the VPN enterprise are on a relatively common time-base. It is not necessary that they be synchronized to the second or even to the minute. The actual machinations necessary to the configuration of the node, up to and perhaps including a reboot, are extensive enough to mask time setting discrepancies of up to several minutes.

As the global ATM end-nodes already have time-synchronization with the host 20 or external system management component 22 taking place, the most important entity to reasonably time-synchronize is the CA 14, as this is the determinant of the accuracy of the beginning of the certificate validity period. This should be at least approximately synchronized to the same host/external system management component time. Again, it is important to pay attention to the time zone and the effect it has on the node's offset from GMT. Remote operator interface nodes, such as remote operator interface PCs 12 or 26, should also be loosely synchronized to host/external system management component time, though this is less critical as any variations in time on these nodes only affect the node itself, and then only for the time period reflecting the temporal inaccuracy.

This issue only exists, of course, at the very beginning of a certificate's lifetime. In an aspect of VPN implementation for an embodiment of the present invention, certificate expiration and re-acquisition at the end of a certificate's validity period is handled in a different fashion, and should not be subject to this issue. Additionally, it is very likely that this circumstance would only ever arise in a development or testing/certification environment, as actual field conditions and requirements dictate a much stricter observance of correct time settings.

Various preferred embodiments of the invention have been described in fulfillment of the various objects of the invention. It should be recognized that these embodiments are merely illustrative of the principles of the present invention. Numerous modifications and adaptations thereof will be readily apparent to those skilled in the art without departing from the spirit and scope of the present invention.

## Claims

1. A method for secure communication between banking nodes over a network, comprising:
installing a root certificate for a certificate authority on at least one banking node on the network;
sending a certificate request packaged with a public key for the banking node over the network to the certificate authority;
sending a digital certificate to the banking node over the network certifying an identity for the banking node by the certificate authority; and
allowing the banking node to mutually verify identification with at least one other banking node on the network by an exchange of the banking node's digital certificate for a digital certificate of the other banking node.

2. The method of claim 1, wherein installing the root certificate on the banking node further comprises installing a self-signed digital certificate for the certificate authority on the banking node.

3. The method of claim 1, wherein installing the root certificate on the banking node further comprises deploying the root certificate for one of floppy disk-based installation, web-based installation, and depot based installation on the banking node.

4. The method of claim 1, wherein installing the root certificate on the banking node further comprises installing the root certificate on one of a self-service transaction terminal node, a remote operator interface node, a host node, and an external system management node.

5. The method of claim 1, wherein installing the root certificate on the banking node further comprises receiving entry of an IP address for the certificate authority by the banking node.

6. The method of claim 5, wherein receiving the entry of the IP address for the certificate authority further comprises prompting for the IP address for the certificate authority.

7. The method of claim 1, wherein installing the root certificate on the banking node further comprises receiving entry of an IP address for at least one other banking node designated to administer the banking node.

8. The method of claim 7, wherein receiving the entry of the IP address for the other banking node further comprises prompting for the IP address for the other banking node.

9. The method of claim 1, wherein sending the certificate request further comprises sending the certificate request packaged with the public key over the network to the certificate authority configured with an IP address.

10. The method of claim 1, wherein sending the certificate request further comprises generating the certificate request and a public/private key pair for the banking node.

11. The method of claim 10, wherein generating the public/private key pair further comprises storing the private key locally on the banking node.

12. The method of claim 1, wherein sending the certificate request further comprises sending the certificate request with information identifying the banking node.

13. The method of claim 1, wherein sending the digital certificate further comprises issuing the digital certificate authenticating the identity for the banking node by the certificate authority.

14. The method of claim 13, wherein issuing the digital certificate further comprises checking a policy database of the certificate authority for banking nodes that the certificate authority is permitted to authenticate.

15. The method of claim 14, wherein checking the policy database further comprises updating the policy database to reflect the issuance of the digital certificate to the banking node.

16. The method of claim 13, wherein issuing the digital certificate further comprises adding the banking node to a policy database of the certificate authority consisting of banking nodes that the certificate authority is permitted to authenticate.

17. The method of claim 16, wherein adding the banking node to the policy database further comprises adding the banking node to the policy database via a dedicated policy database management tool.

18. The method of claim 17, wherein adding the banking node to the policy database via the policy database management tool further comprises prompting a user for entry of an IP address for the banking node by a graphical user interface of the policy database management tool.

19. The method of claim 1, wherein sending the digital certificate further comprises importing the digital certificate into an IPSec configuration of the banking node.

20. The method of claim 1, wherein allowing the banking node to mutually verify identification further comprises verifying the identities of the respective banking nodes according to their respective digital certificates by an IPSec configuration of the respective banking nodes.

21. A system for secure communication between banking nodes over a network, comprising:
means for installing a root certificate for a certificate authority on at least one banking node on the network;
means for sending a certificate request packaged with a public key for the banking node over the network to the certificate authority;
means for sending a digital certificate to the banking node over the network certifying an identity for the banking node by the certificate authority; and
means for allowing the banking node to mutually verify identification with at least one other banking node on the network by an exchange of the banking node's digital certificate for a digital certificate of the other banking node.

22. The system of claim 21, wherein the means for installing the root certificate on the banking node further comprises means for installing a self-signed digital certificate for the certificate authority on the banking node.

23. The system of claim 21, wherein the means for installing the root certificate on the banking node further comprises means for deploying the root certificate for one of floppy disk-based installation, web-based installation, and depot based installation on the banking node.

24. The system of claim 21, wherein the means for installing the root certificate on the banking node further comprises means for installing the root certificate on one of a self-service transaction terminal node, a remote operator interface node, a host node, and an external system management node.

25. The system of claim 21, wherein the means for installing the root certificate on the banking node further comprises means for receiving entry of an IP address for the certificate authority by the banking node.

26. The system of claim 25, wherein the means for receiving the entry of the IP address for the certificate authority further comprises means for prompting for the IP address for the certificate authority.

27. The system of claim 21, wherein the means for installing the root certificate on the banking node further comprises means for receiving entry of an IP address for at least one other banking node designated to administer the banking node.

28. The system of claim 27, wherein the means for receiving the entry of the IP address for the other banking node further comprises means for prompting for the IP address for the other banking node.

29. The system of claim 21, wherein the means for sending the certificate request further comprises means for sending the certificate request packaged with the public key over the network to the certificate authority configured with an IP address.

30. The system of claim 21, wherein the means for sending the certificate request further comprises means for generating the certificate request and a public/private key pair for the banking node.

31. The system of claim 30, wherein the means for generating the public/private key pair further comprises means for storing the private key locally on the banking node.

32. The system of claim 21, wherein the means for sending the certificate request further comprises means for sending the certificate request with information identifying the banking node.

33. The system of claim 21, wherein the means for sending the digital certificate further comprises means for issuing the digital certificate authenticating the identity for the banking node by the certificate authority.

34. The system of claim 33, wherein the means for issuing the digital certificate further comprises means for checking a policy database of the certificate authority for banking nodes that the certificate authority is permitted to authenticate.

35. The system of claim 34, wherein the means for checking the policy database further comprises means for updating the policy database to reflect the issuance of the digital certificate to the banking node.

36. The system of claim 33, wherein the means for issuing the digital certificate further comprises means for adding the banking node to a policy database of the certificate authority consisting of banking nodes that the certificate authority is permitted to authenticate.

37. The system of claim 36, wherein the means for adding the banking node to the policy database further comprises means for adding the banking node to the policy database via a dedicated policy database management tool.

38. The system of claim 37, wherein the means for adding the banking node to the policy database via the policy database management tool further comprises means for prompting a user for entry of an IP address for the banking node by a graphical user interface of the policy database management tool.

39. The system of claim 21, wherein the means for sending the digital certificate further comprises means for importing the digital certificate into an IPSec configuration of the banking node.

40. The system of claim 21, wherein the means for allowing the banking node to mutually verify identification further comprises means for verifying the identities of the respective banking nodes according to their respective digital certificates by an IPSec configuration of the respective banking nodes.
